# EUROPEAN PATENT APPLICATION

(11) **EP 4 604 040 A1**
(43) Date of publication of application: **20.08.2025**
(21) Application number: 24157977.0
(22) Date of filing: 15.02.2024
(51) Int. Cl.: G06Q 20/34, G06Q 20/40, G07F 7/10

(54) **A BIOMETRIC CARD AND METHODS OF USE OF A BIOMETRIC CARD**

(71) Applicant: Mastercard International Incorporated, Purchase, NY 10577 (US)
(72) Inventor: VAN DE VELDE, Eddy, 3000 Leuven (BE); SMETS, Patrik, 3130 Begijnendijk (BE)
(74) Representative: Keltie LLP

(57) **Abstract**

A biometric payment card comprising: a processor (122); a data store (126) for storing cardholder biometric data as part of a biometric reference (130) for use in authorising transactions; a biometric sensor configured to provide a biometric verification result to the processor (122), the biometric matching result being derived from a comparison of cardholder biometric data obtained during a transaction with the biometric reference (130) wherein, for each transaction that the biometric payment card undertakes, the processor is configured to output the biometric verification result to a payment processing network (208) and to output a biometric verification result version number that indicates the encoding format of the biometric verification result.

## Description

### TECHNICAL FIELD

The present disclosure relates to a biometric card and methods of use of a biometric card.

Embodiments of the present disclosure generally relate to methods, apparatus and systems for securely and conveniently enrolling consumer biometric data into a biometric payment card, and methods concerning subsequent use of the biometric payment card.

### BACKGROUND

Millions of consumer transactions occur daily using payment cards, such as credit cards, debit cards, prepaid cards, and the like financial products.

Consumers or cardholders may engage in transactions in a variety of different environments, such as in a retail store, over the Internet (or online), at automatic-teller machines (ATMs), and/or via a telephone call to order merchandise via an interaction between the cardholder and a customer service representative. Cardholder data may be obtained by swiping a payment card through a card reader (e.g. for a magnetic stripe card) or by inserting or tapping a card on to a chip card reader (e.g. for smart payment cards or chip cards).

The risk of fraudulent activity (and loss of money) has increased with the increased use of payment card accounts, and payment card transaction processing companies have designed and implemented various types of anti-fraud mechanisms and/or features, such as holograms, a photograph of the cardholder appearing on the rear side of the payment card, and/or a card Verification code (CVC). In addition, payment card credential data processing features have been implemented that require the cardholder to use passwords and/or personal identification numbers (PINs). The payment card transaction processing companies have also implemented various types of payment card account fraud monitoring and notification processes in order to prevent and/or curtail fraudulent activities.

Chip cards, when used in conjunction with a personal identification number (PIN), are a solution to counterfeit and lost and stolen card fraud. The chip prevents the card from being cloned and the PIN prevents it from being used by someone else if lost or stolen. With chip, counterfeit fraud has almost been eliminated and, as a result, card present fraud has plummeted to single digits basepoints (hftps://www.ecb.europa.eu/pub/cardfraud/html/ecb.cardfraudreport202110~cac4c418 e8.en.html). Lost-and-stolen card fraud is the most prominent category of card-present fraud, accounting for about half of it.

For contactless, with respect to lost & stolen protection, a balance has been struck between security and convenience. Typically, PIN will only be requested for high value transactions. The vast majority of low value transactions is accepted without cardholder verification and lost-and-stolen fraud is small.

Lost-and-stolen attacks are difficult to scale, as they require the fraudster to get physical possession of the card without the cardholder realizing it - as otherwise the card will be blocked. And they are hardly worth the effort because of the limitation on the transaction amount

Most attacks on bypassing lost-and-stolen protection come from ethical hackers, such as academics, that search publicity rather than financial gain.

Biometric cards are chip cards with on-card biometric verification as alternative to PIN for lost & stolen protection.

In order to further reduce the risk of fraud in card-present transactions, biometric payment cards, which are chip cards with on-card biometric verification functionality, provide a simple and secure way for cardholders to authenticate their identity for in-store purchases using biometrics (e.g. with a fingerprint), as an alternative to utilizing a PIN, a password or a signature, may be used. Since biometric characteristics are difficult to duplicate, they are ideal for use to protect against fraudulent activities.

Biometric payment cards may include fingerprint template data that is stored on the biometric payment card itself, and during purchase transaction processing (which includes user authentication of the cardholder) the fingerprint template data never leaves the biometric payment card. Instead, the cardholder places their finger (such as a thumb) on a fingerprint sensor built into the biometric payment card during a payment transaction. Fingerprint data is then obtained and compared to the stored fingerprint template data, and payment data is transmitted to a merchant's reader device, with an indication on successful authentication or not. The fingerprint template data on the biometric payment card data is not shared with the merchant, and therefore is not transmitted to a remote server for authentication purposes. Such operation protects the cardholder's personal identification data while also improving security of the purchase transaction.

Biometric cards have a higher activation/enrolment cost than 'standard' contactless cards with PIN. For biometric cards to be competitive, they need to offer better convenience at similar or better (perceived) levels of security. With fraud levels on standard cards being relatively low, convenience of use needs to be the main differentiator and selling point.

With current biometric cards, enrolment, in which the cardholder's biometrics are provisioned on to the card, is typically done as a separate process, prior to card activation and/or transaction processing. Enrolment may be done at home or, alternatively, the customer has to visit a bank branch.

Some current biometric cards return a basic "yes/no" result from a biometric authentication process. However, future biometric cards may provide biometric results that comprise a level of biometric matching and the biometric data that is output from a card can vary depending on the sensor hardware or the sensor algorithm used. Biometric/fingerprint sensors within a payment card are proprietary systems and different sensors will produce biometric verification results (BVR) that differ in the length of the biometric verification result and also the type of data contained within the biometric verification result.

For example, one sensor may provide output data that comprises a matching result that only indicates the level of matching between fingerprint template data and fingerprint data obtained during authentication whereas another sensor may additionally include liveness data indicating if the fingerprint is from a live person. Some sensors may provide matching levels to a finer degree than other sensors. As a result, the number of bits used by a particular sensor (algorithm) to code the biometric verification result of a transaction may vary from other sensors.

Additionally, the card application receiving a biometric verification result from a sensor may concatenate this result with previous results and send the combination, i.e. the current as well as the previous biometric verifications results, in an online authorization request. Depending on the particular card/sensor configuration used the concatenated result that is sent may vary between cardholders or between issuing banks.

Card issuers may deploy fraud detection methods, including machine learning methods, to detect different patterns of card use within biometric verification results received during a transaction.

The training of such fraud detection methods requires knowledge of the type of data contained within the biometric verification results received from the payment card. However, the available space within the authorisation request sent to the issuer is limited. Some fraud detection mechanism prefer quantity over quality - so more historic data but less fine-grained versus fewer highly detailed biometric verification results. Therefore, the issuer has to choose the best compromise between size of the individual data and number of data elements within the limited space.

It is an object of the present disclosure to provide a biometric card that addresses one or more of the above-mentioned disadvantages.

### SUMMARY OF THE DISCLOSURE

According to a first aspect of the present disclosure, there is provided a biometric payment card comprising: a processor; a data store for storing cardholder biometric data as part of a biometric reference for use in authorising transactions; a biometric sensor configured to provide a biometric verification result to the processor, the biometric verification result being derived from a comparison of cardholder biometric data obtained during a transaction with the biometric reference wherein, for each transaction that the biometric payment card undertakes, the processor is configured to output the biometric verification result to a payment processing network and to output a biometric verification result version number that indicates the encoding format of the biometric verification result.

The present disclosure provides a biometric payment card which stores a biometric reference corresponding to biometric data of the cardholder. During a transaction, the biometric sensor is configured to provide a biometric verification result from a comparison between the biometric reference and biometric data sampled during the transaction to the processor (the card's payment application) and the processor is configured to output this biometric verification result to the payment processing network along with a biometric verification result version number that indicates the format of the data for the biometric verification results.

The payment card may comprise an output and the biometric sensor may be arranged to compare biometric data received during the transaction with the stored biometric reference in order to determine whether the received biometric data matches the biometric reference and to output the biometric verification result indicating the outcome of the comparison.

The biometric matching result may comprise a matching score and the biometric sensor may be arranged to generate a matching score in respect of biometric data provided during each transaction and to store the matching score in the data store

The payment card may be arranged to output historical biometric verification results to the payment network and the biometric version number may indicate the number of historical biometric verification results contained in the output.

During the card personalisation process, the processor may be configured to store ***β*** biometric verification results within the data store. The biometric verification result that is output to the payment processing network may therefore be part of a series of biometric verification results that are sent. It is noted that a biometric verification result is the outcome of one presentation of the payment card.

According to a second aspect of the present disclosure, there is provided a method of detecting fraudulent use of a biometric payment card on a payment network, comprising, at a network server: receiving transaction data from the biometric payment card during a current transaction, the transaction data comprising: β biometric verification results corresponding to a biometric verification result associated with the current transaction, the biometric verification result being derived from a comparison of biometric data obtained during the current transaction with a biometric reference, and β -1 biometric verification results corresponding to β -1 previous transactions prior to the current transaction; and a biometric verification result version number that indicates the encoding format of the biometric verification result; retrieving the biometric verification result version number from the received transaction data; recovering each biometric verification result from the received transaction data in dependence on the biometric verification result version number; analysing the ***β*** biometric verification results using a pattern matching algorithm that has been trained on data matching the encoding format of the received transaction data; triggering a PIN request in dependence on the analysis of the ***β*** biometric verification results.

Each biometric verification result may comprise α bits and recovering each biometric verification result may comprise determining the format and content of the α bits of data in dependence on the biometric verification result version number.

Recovering each biometric verification result may comprise determining a biometric matching result, the biometric matching result being derived from a comparison of cardholder biometric data obtained during the transaction with a biometric reference.

Recovering each biometric verification result may comprise determining liveness data indicating if the biometric verification result derives from a live person.

The network server may be configured with a plurality of different pattern matching algorithms, each pattern matching algorithm being associated with a different biometric verification result version number.

Analysing the β biometric verification results may comprise selecting the pattern matching algorithm that corresponds to the retrieved biometric verification result version number.

According to a third aspect of the present disclosure, there is provided a computer program product comprising instructions which, when the program is executed by a computer, cause the computer to carry out the method of the second aspect of the present disclosure as outlined above.

According to a fourth aspect of the present disclosure, there is provided a computer-readable storage medium comprising instructions which, when executed by a computer, cause the computer to carry out the method of the second aspect of the present disclosure as described above.

Within the scope of this application, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the disclosure will now be described, by way of example only, with reference to the accompanying drawings, in which:
Figure 1A is a diagram illustrating the components of a biometric payment card according to some embodiments of the disclosure;
Figure 1B is a block diagram of the components of a biometric payment card in accordance with some embodiments of the disclosure;
Figure 2 is a block diagram of a purchase transaction system to illustrate further features of the payment card of Figure 1;
Figure 3 is a diagram showing a transaction system and the payment interactions between entities in accordance with embodiments of the present disclosure;
Figure 4 is a diagram showing a method of using a biometric payment card in accordance with an embodiment of the disclosure.
Figure 5 is a diagram showing the flow of biometric data from a biometric payment card to an issuer in accordance with an embodiment of the disclosure;
Figure 6 is a diagram showing a transaction system comprising multiple biometric payment cards in accordance with an embodiment of the disclosure; and
Figure 7 is a diagram showing a method of detecting fraud in accordance with an embodiment of the disclosure.

### DETAILED DESCRIPTION

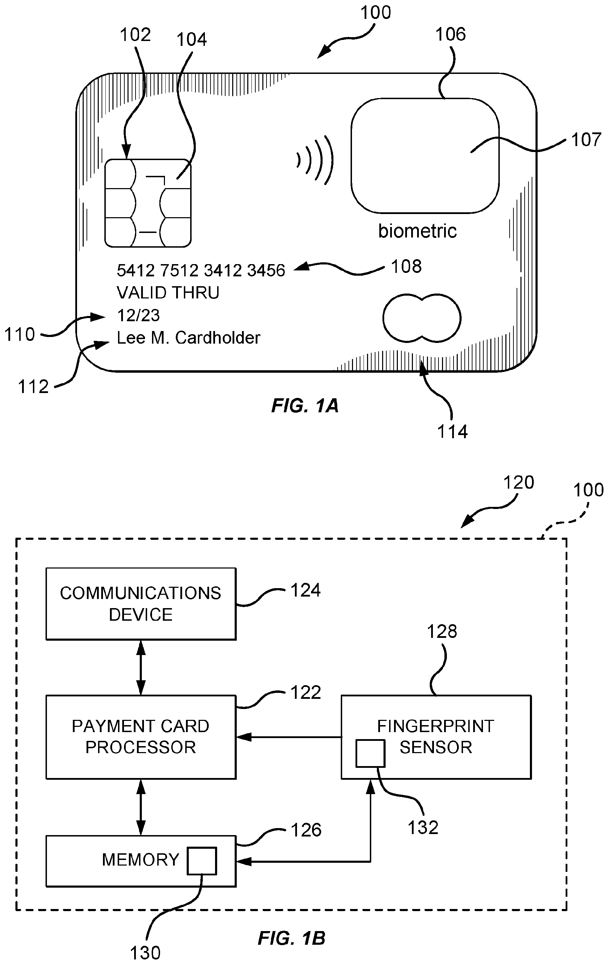

General and specific embodiments of the disclosure will be described below with reference to Figures 1 to 7.

Reference will now be made in detail to various novel embodiments, examples of which are illustrated in the accompanying drawings. The drawings and descriptions thereof are not intended to limit the invention to any particular embodiment(s). On the contrary, the descriptions provided herein are intended to cover alternatives, modifications, and equivalents thereof. In the following description, numerous specific details are set forth in order to provide a thorough understanding of the various embodiments, but some or all of these embodiments may be practiced without some or all of the specific details. In other instances, well- known process operations have not been described in detail in order not to unnecessarily obscure novel aspects.

Figure 1A is a diagram illustrating a biometric payment card 100 in accordance with some embodiments. The biometric payment card 100 may be transmitted to the consumer or user by his or her issuer via, for example, the mail or by courier to the consumer's home or residence. In some embodiments, the biometric payment card 100 is a smart card or chip card that includes an EMV^{®} chip 102 connected to an antenna and, optionally, having a contact faceplate 104 on the front side or face of the card. The EMV^{®} chip 102 may be a computer chip or computer processor with an operating system, one or more applications, and a data storage component or element (not shown) which stores instructions for conducting operations in accordance with processes described herein. The EMV^{®} chip 102 permits the biometric payment card 100 to interact with a merchant card reader (not shown) in accordance with EMV^{®} specifications to process purchase transactions. Specifically, the EMV^{®} chip 102 operates in accordance with the EMV^{®} contactless specifications which concern transactions using proximity near-field communications (NFC) payment devices. The NFC devices allow transactions to be made by waving or tapping the payment card containing the EMV^{®} chip on an EMV^{®} contactless enabled terminal, such as the payment card reader device 202. In embodiments disclosed herein, the EMV^{®} chip 102 is operably connected to a biometric sensor 106, which in this example is an integrated or embedded fingerprint sensor 106 having a finger touch pad 107 on the front side surface or face of the biometric payment card 100.

In some embodiments, the biometric payment card 100 is made of a plastic material, and has dimensions conforming to the known ID-1 format, which is commonly used for credit cards, debit cards, ATM cards and the like. (The ID-1 format specifies a card size of 85.60 × 53.98 mm and includes rounded comers having a radius of between 2.88 millimetres (mm) to 3.48 mm). The biometric payment card 100 may also include a primary account number (PAN) 108, an expiration date 110, the cardholder's name 112, and a payment card logo 114 which are printed or embossed on the front side or face of the payment card 100. It should be understood that the biometric payment card 100 may be made of other types of materials, may have different forms, and may include other features and/or components.

Figure 1B is a block diagram 120 of the components of a biometric payment card in accordance with some embodiments. In some embodiments, the biometric payment card 100 includes a payment card processor 122 (also referred to herein as a "payment application") operably connected to a communications device 124 and to a memory 126 (the processor 122, communications device 124 and memory 126 corresponding to the chip 102 in Figure 1A). A fingerprint sensor 128 (corresponding to the biometric sensor 106 in Figure 1A) is also operably connected to the payment card processor 122 and is operable to provide fingerprint comparison outcome data based on fingerprint data obtained from a cardholder to the payment card processor 122. In implementations disclosed herein, the communications device 124 is a near-field communication (NFC) device operable to communicate with, for example, an NFC reader device of a merchant and the like.

The memory 126 is operably connected to the biometric sensor 106/fingerprint sensor 128 and is arranged to store a biometric reference 130 derived from biometric data from the biometric sensor 106/fingerprint sensor 128. The fingerprint sensor 128 additionally comprises a processor 132 which is arranged to store the biometric reference 130 in the memory 126 and also to carry out biometric matching comparisons between the stored biometric reference 130 and biometric data obtained by the fingerprint sensor 128 from a cardholder.

The memory 126 may store an operating system, one or more applications, and instructions for performing cryptographic calculations and payment operations. In some embodiments, the payment card processor 122 is an EMV^{®} chip which operates as explained above in accordance with EMV^{®} specifications to process purchase transactions.

The memory 126 may equally store an operating system and application, for operations, such as a cardholder enrolment process, a fingerprint comparison process (to be performed by the processor 132) and a fingerprint template data update process (to be performed by the processor 132), in accordance with processes described herein.

In the arrangement shown in Figure 1B the fingerprint sensor 128 (and the processor 132 therein) are in communication with the memory 126 which is shared with the payment card processor 122. In an alternative arrangement the fingerprint sensor 128 may have its own dedicated memory (in addition to the processor 132) such that the fingerprint data (the biometric reference 130) is stored in a separate memory location. In such an alternative arrangement the operating system and application for conducting cardholder enrolment, fingerprint comparisons and fingerprint template updates would be stored in the dedicated memory of the fingerprint sensor 128.

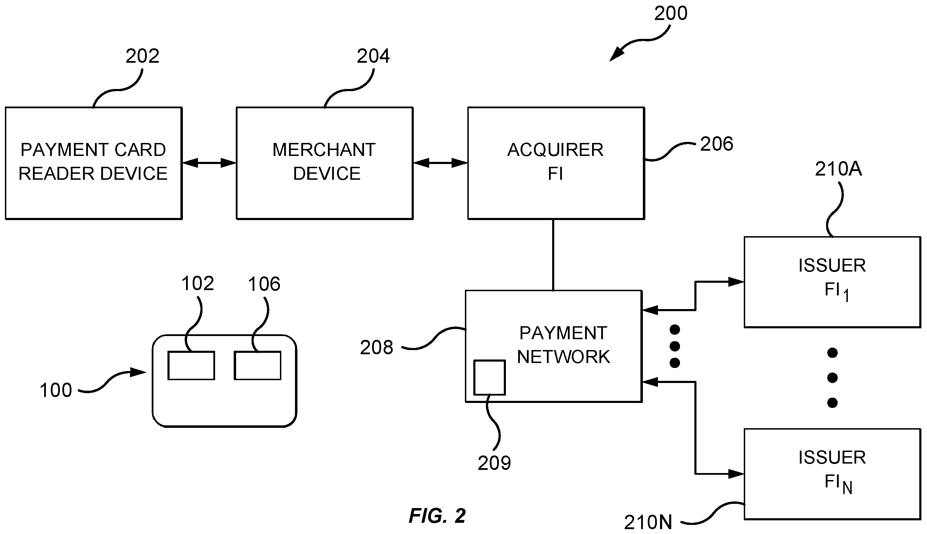

Figure 2 is a block diagram of a purchase transaction system 200 to illustrate a biometric authentication method and a cardholder fingerprint enrolment process in accordance with some embodiments.

As shown in the Figure a chip-enabled payment card reader 202 is in communication with a merchant device 204. The merchant device 204 in turn is in communication with an acquirer 206, a payment network 208 and one of more issuers (210A...210N). The payment network 208 comprises a network server 209.

During a purchase transaction, in some implementations the biometric authentication process entails a cardholder presenting his or her biometric payment card 100 to a chip-enabled NFC payment card reader 202 while at the same time holding their thumb on the finger touch pad 107 of the built-in fingerprint sensor 106 located on the face of the biometric payment card. Fingerprint template data is then extracted by the processor 132 from the cardholder's fingerprint image (thumb print) received from the fingerprint sensor 106 and compared against one or more cardholder biometric reference templates (e.g. fingerprint template(s)) 130 stored in the memory 126 of the biometric payment card 100. The card reader 202 then receives payment data and an indication whether the authentication of the cardholder was successful or failed (e.g., whether fingerprint template data of the user matches one or more stored biometric templates). In addition, in some implementations, fingerprint sensor 128 may also generate a matching result/score and send it to the EMV^{®} chip that, in turn, transmits it to the payment card reader device 202.

In implementations described herein, the payment card reader device 202 transmits the biometric authentication data, including the matching result/score, as part of the payment data to the merchant device 204 (which may be a point of sale device such as a cash register) for onward transmission through the payment system and further processing.

Transaction data including biometric authentication data may therefore be sent via the acquirer financial institution 206 to the payment network 208 and the issuer financial institution 210. As described below the network server 209 of the payment network 208, on behalf of the issuer, may operate to analyse the received biometric authentication data and additionally forward transaction data on to the issuer financial institution (210A-210N) for transaction authorisation.

When a transaction is authorized, the issuer FI transmits an authorization message to the merchant device 204 via the payment network 208 and acquirer FI 206.

Embodiments of the present disclosure provides for a "transactional enrolment" process in which the enrolment of the biometric payment card is performed as the customer is transacting. In other words, enrolment is performed as payment transactions at a contactless point-of-sale device are undertaken and the cardholder's biometric reference 130 is built up over time rather than being set during a traditional enrolment process.

Enrolment according to embodiments of the present disclosure may start as soon as the card is activated and may essentially be transparent to the cardholder and the card payment application 122. As the enrolment of the biometrics takes place over the course of a number of transactions, it is noted that the biometric reference 130 stored in the memory 126 of the payment card 100 is gradually built up. While the biometric payment card 100 is in such a "learning biometrics" phase, if cardholder verification is required of the cardholder (e.g. for a high value transaction), then the issuer or the network may do so by requesting PIN entry.

Once the biometric reference 130 within the payment card has matured, then the need for cardholder authentication through PIN entry for high value transactions will be taken over by biometric authentication for every transaction. PIN entry may then only be requested to ensure the cardholder does not forget their PIN (it is noted that in the event of biometric authentication failing, e.g. because of injury to the cardholder, then the cardholder would be required to use PIN entry).

According to embodiments of the present disclosure, the biometric payment card 100 initially enters a "biometric learning" phase in which a biometric reference 130 for the cardholder is created. Once the learning phase has concluded however, the biometric sensor 106 continues to sample the cardholder's biometrics in order to update the biometric reference for the cardholder for each transaction where biometrics are captured.

Over time the biometric traits presented by the cardholder during a transaction may change because:
- The positioning of the cardholder's finger on the card evolves
- The actual fingerprint evolves because of aging, (change in) profession, injury etc.
- The circumstance of capture changes because of moist, dirt etc.

Therefore, even though a mature biometric reference 130 exists in the memory 126 of the biometric payment card 100, the biometric match rate determined by the processor 132 may still decline (i.e. reduce) unless the biometric reference is adjusted.

Embodiments of the present disclosure therefore acknowledge that it may be advantageous for the cardholder if the biometric payment card 100 continues to update the biometric reference.

The extent of each update to the biometric reference may depend on:
- the biometric traits of the transaction in progress (e.g. the quality, size, correlation with reference)
- the biometric traits of previous transactions and (primarily) how they compared to the reference

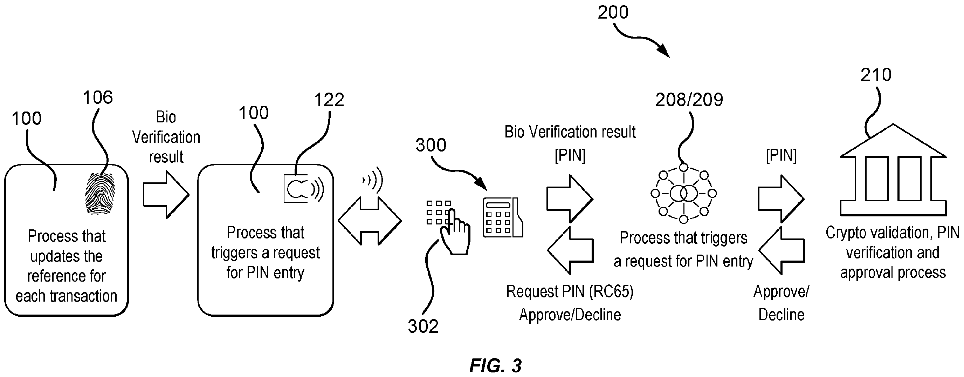

Figure 3 shows a purchase transaction system 200 and the flow of data within the system during a transaction. The system shown in the figure comprises a physical biometric payment card 100, a payment terminal 300 comprising a PIN pad 302, a payment network 208 and an issuer entity 210.

It is noted that for clarity and to highlight the flow of information within the system, the biometric payment card 100 is shown twice in Figure 3. On the far left of Figure 3 the biometric payment card 100 is shown with the biometric sensor 106 (e.g. a fingerprint sensor 128). The biometric payment card 100 is then shown again with the payment application/processor 122 visible.

The flow of information through the transaction system 200 is indicated by the arrows in Figure 3.

Activation of the biometric payment card 100 is performed as per known processes, e.g., via a PIN mailer, mobile app, online activation or toll-free number, in combination with cardholder verification (KYC).

Once the biometric payment card 100 has been activated then biometric verification result data, which may be used to build or update the biometric reference, will be present for most, if not all, contactless transactions. If the cardholder does not place their fingerprint on the biometric sensor 106 during a transaction, the payment transaction may still proceed but transactional enrolment will not progress, and the transaction will additionally occur without biometric authentication.

During enrolment of the biometric payment card in accordance with embodiments of the present disclosure, a portion of the transactions that are undertaken by the cardholder may require completion using an online PIN. PIN entry may be triggered by the issuer/network (e.g., A network authorisation response code 65 (RC65) may be issued during a transaction by the Mastercard network and the issue of such a code will require the cardholder to go through an online PIN entry process).

It is noted that online PIN entry during a contactless transaction does not require the cardholder to insert their payment card into a PIN reader. Instead, the cardholder is requested to enter their PIN into the PIN pad 302 and the PIN is encrypted and sent to the network where it may be verified.

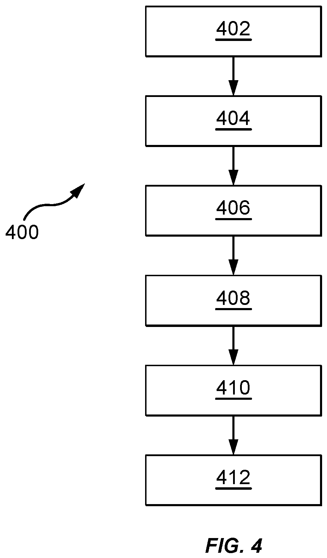

Figure 4 represents an overview of the process 400 of processing the transaction of Figure 3 using the biometric payment card 100.

In step 402, a transaction is initiated by the cardholder presenting the biometric payment card 100 at the payment terminal 300.

In step 404, the cardholder places their finger on the biometric sensor (106, 128) which obtains biometric data (fingerprint data) and generates a biometric verification result (BVR) which is sent to the payment card processor 122 (the payment application).

In step 406 the payment card processor 122 copies the received biometric verification result to the memory 126. It is noted that the memory 126 may only hold a certain number of biometric verification results (BVRs). When the memory buffer is full, the process of copying the current received biometric verification result to the memory 126 may therefore comprise deleting the oldest biometric verification result from the memory 126, shifting the remaining biometric verification results across and then saving the current biometric verification result.

Transaction data is sent to the issuer 210 during the transaction in the form of a transaction message referred to here as an authorisation request. Prior to generation of the authorisation request the payment card processor 122 first builds, in step 408, the transaction data and other related data (e.g. cryptogram version, cryptographic key related data) as issuer application data as part of the process of generating an application cryptogram. Building the issuer application data comprises concatenating the biometric verification results and retrieving a biometric verification result version number (BVR version number) from the memory 126.

The biometric verification result version number is provisioned into the memory 126 as a persistent data object during card personalisation. As described in more detail below, the BVR version number allows the issuer 210 to identify the format of the biometric data output from the biometric sensor (106, 128). For example, the version number may indicate that each biometric verification result comprises ***α*** bits and that there are ***β*** verification results included in the transmitted transaction data.

In step 410 the processor 122 generates an application cryptogram using the Issuer Application Data and in step 412 transmits an authorisation request incorporating the application cryptogram to the issuer 210 via the payment network 208.

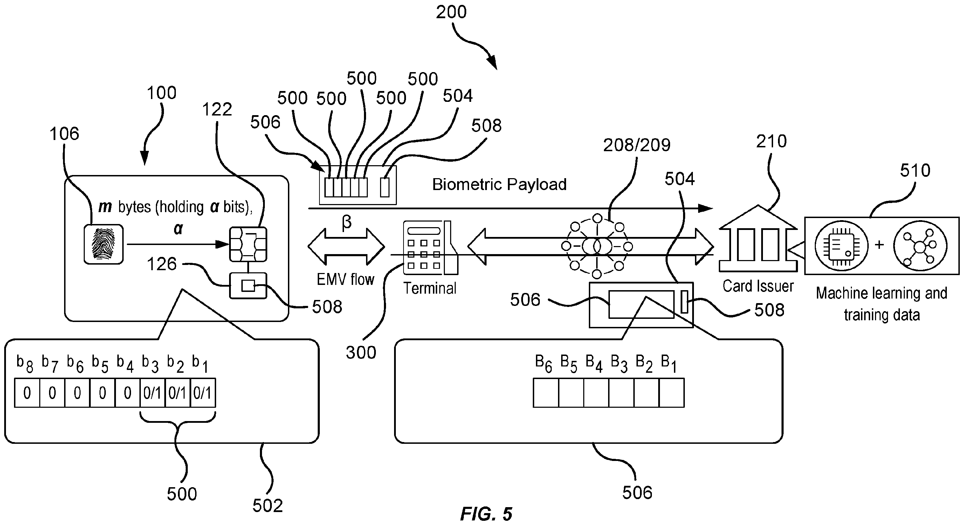

Figure 5 shows an overview of the data that is sent from the biometric sensor (106, 128) to the payment application 122 and then via the terminal 300 to the card issuer 210.

As noted above the payment card 100 comprises a biometric sensor (106, 128) and a processor (payment application) 122.

The biometric sensor (106, 128), which has been provided from a sensor vendor, is configured to sample biometric data in accordance with a proprietary algorithm and to output a biometric verification result 500. As shown in Figure 5 the sensor (106, 128) outputs one byte of data 502 of which the biometric verification result 500 comprises ***α*** bits. It is noted that depending on the sensor incorporated into the biometric payment card 100 the sensor (106, 128) may output *m* bytes of data. In the example of Figure 5 however, *m* = 1.

As described above in relation to Figure 4, the payment card processor 122 (the payment application) receives the sensor output and is configured to copy the biometric verification result 500 to the payment card memory 126 and then generate an authorisation request 504 to be sent to the issuer 210, the request comprising biometric data 506 in the form of ***β*** concatenated biometric verification results 500 from the memory 126 along with the BVR version number 508 (that is also stored in the memory 126).

The processor 122 is configured during card personalisation to include ***β*** biometric verification results 500 in the authorisation request 504 and the number of BVRs (***β***) to include is determined by the BVR version number 508.

The authorisation request 504 therefore comprises a "biometric payload" of ((***β*** × ***α*)** - 1)/8 + 1 bytes of biometric verification results (in addition to the version number 508). In the example shown in Figure 5, 16 concatenated biometric verification results 500, of 3 bits each, are included in the authorisation request 504 which means there are 6 bytes of biometric data 506 (B₁ to B₆).

The biometric data 506 is received by the issuer 210 which recovers the biometric data 506 and version number 508 from the authorisation request 504. The version number 508 allows the issuer 210 to determine the format and content of the received biometric data and to select a suitable machine learning algorithm 510 that has been trained to accept as input ***β*** biometric verification results of the type associated with that version number and to detect different patterns of behaviour (e.g. that there is suspicious activity or that the biometric card is new and the biometric reference is being generated or that the biometric results are showing a degrading matching level with the biometric reference).

As noted above, the BVR version number 508 defines the encoding of the biometric data 506 that is sent in the biometric payload of the authorisation request 504.

The proprietary algorithm used in the biometric sensor (106, 128) may vary between issuers 210 and issuers may select different algorithms based on geography or customer profile. This results in different encodings for each biometric verification result 500, i.e. the number of bits, ***α***, used to send the result, the meaning of the result itself (for example whether the result relates to the level of biometric matching only or whether it additionally includes a liveness result) and the number of BVRs, ***β***, that are to be concatenated into the authorisation request 504.

The encoding (i.e. the meaning of the ***α*** bits) and number of BVRs (***β***) are reflected in the BVR version number 508. During card personalisation the payment card processor 122 is configured to store the required number of BVRs 500 in memory 126 and to update the stored BVRs 500 whenever a new BVR is received from the biometric sensor 106/128. The payment card 100 is also configured to store the BVR version number 508 in memory.

Whenever an authorisation request 504 is sent, the BVR version number 508 is included in the data sent such that the issuer 210 (or other suitable entity in the payment network) can interpret the biometric payload in the authorisation request 504 and select an appropriate fraud detection algorithm 510 (e.g. a suitable trained machine learning algorithm) to interpret the received biometric data 506.

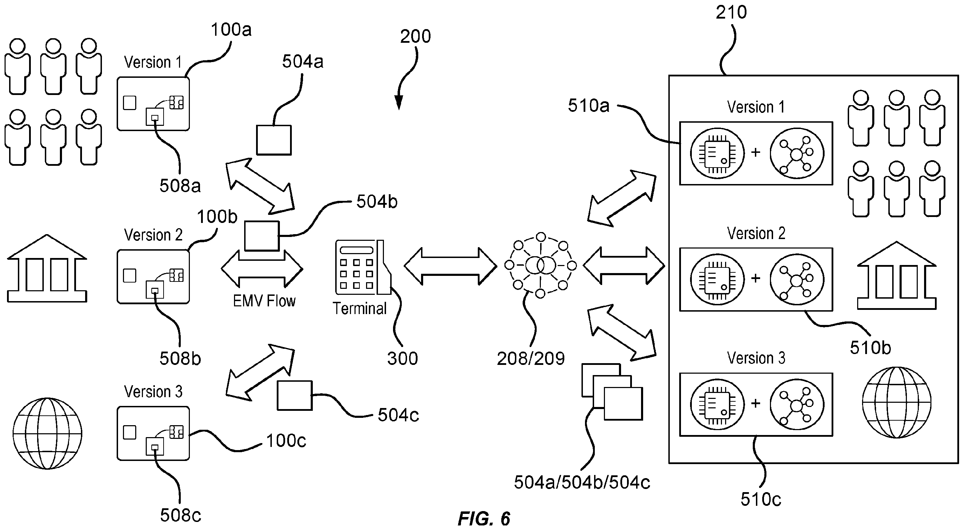

Figure 6 shows a purchase transaction system in which three different biometric payment cards (100a, 100b, 100c) interact with a terminal 300 during a transaction. The first biometric payment card 100a has been personalised with a first BVR version number 508a, the second biometric payment card 100b has been personalised with a second BVR version number 508b and the third biometric payment card 100c has been personalised with a third BVR version number 508c.

Within the issuer 210, there are three trained machine learning algorithms (510a, 510b, 510c), each of which is optimised to analyse biometric verification results of one specific BVR version number.

The inclusion of the BVR version number 508a/508b/508c within the biometric payload of the authorisation request 504a/504b/504c enables the issuer 210 to determine which machine learning algorithm (510a, 510b, 510c) to deploy in order to analyse the biometric data 506 contained within a specific authorisation request 504a/504b/504c.

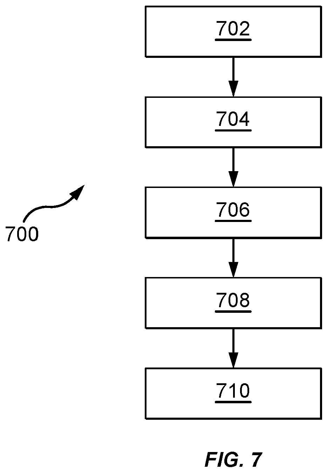

Figure 7 shows a method of detecting fraudulent use of a biometric payment card 100 on a payment network at a network server 209 in accordance with an embodiment of the present disclosure.

In step 702, the network server 209 receives transaction data 504 from the biometric payment card 100 during a current transaction, the transaction data comprising: a number 508 that indicates the encoding format of the biometric verification result and, as per this version number, β biometric verification results 500 corresponding to a biometric verification result associated with the current transaction, the biometric verification result being derived from a comparison of biometric data obtained during the current transaction with a biometric reference 130, and β -1 biometric verification results corresponding to β -1 previous transactions prior to the current transaction;

In step 704, the network server retrieves the biometric verification result version number 508 from the received transaction data.

In step 706, the server recovers each biometric verification result 500 from the received transaction data in dependence on the biometric verification result version number 508.

In step 708 the server analyses the β biometric verification results using a pattern matching algorithm 510 that has been trained on data matching the encoding format of the received transaction data.

In step 710, the triggers a PIN request in dependence on the analysis of the ***β*** biometric verification results.

### IMPLEMENTATION

An example implementation of a biometric payment card 100 on a payment network 208 is now described.

### Data

Transaction data that is provided during a transaction by the biometric payment card 100 to the payment network 208/network server 209 comprises:
- the biometric verification result version number (BVR version number 508);
- the biometric verification/matching result 500 of the current transaction (as determined by the processor 132 based on a comparison between the biometric data received from the biometric sensor (106, 128) and the biometric reference stored in the memory 126 of the card 100);
- the previous ***β*-***1* biometric verification/matching results 500. The payment card 100 may store a predetermined number of biometric matching results in the card memory 126 and these may be transmitted as described below to the payment network 208.

### Coding

Biometric verification results 500 may be output in accordance with a quantitative categorisation level, e.g. almost perfect match, really good match, rather good match,...,poor match, really poor match, almost no match. If there are, for example, 8 levels of biometric match categories then the biometric verification result may be encoded using 3 bits. If the payment card 100 supplies the network 208 the biometric verification/matching results for the last 16 transactions (including the current transaction) then the biometric match history may be encoded on 6 bytes.

Table 1 below shows two different BVR encoding schemes identified as BVR version number `0001' and BVR version number '0002'. An issuer may choose between different encoding schemes during card personalisation and the card payment processor 122 may be configured to store biometric verification results 100 in memory 126 in accordance with the selected scheme.

For BVR version number '0001' it can be seen that the biometric sensor outputs biometric data on 3 bits of data and 16 biometric verification results 500 are stored in the buffer of the memory of the biometric payment cad such that 6 bytes of biometric data 506 are sent to the issuer 210 during a transaction.

For BVR version number '0002' it can be seen that the biometric sensor (106, 128) outputs biometric data on 5 bits of data and 16 biometric verification results are stored in the buffer of the memory of the biometric payment card 100 such that 10 bytes of biometric data are sent to the issuer during a transaction.

**Table 1-BVR Version Numbers**

| **BVR version number** | **BVR length (*α)*** | **Number of BVRs (*β)*** | **Comment** |
|---|---|---|---|
| '0001' | 3 | 16 | Total length of 6 bytes (prior to padding) |
| '0002' | 5 | 16 | Total length of 10 bytes (prior to padding) |
| | | | |
| | | | |

The coding of the biometric verification result for different BVR version numbers may differ. Table 2 shows the coding for BVR version number = '0001'.

**Table 2-Coding of Biometric Verification Result**

| **Value** | **Meaning** |
|---|---|
| 000b | Not performed |
| 001b | No match |
| 010b | Poor match |
| 011b | Reasonable match |
| 100b | Good match |
| 101b | Very good match |
| 110b | Near perfect match |
| 111b | Perfect match |

As shown in Table 2, the 3 bits of data in each biometric verification result encode 8 different matching results.

Table 3 shows the coding for BVR Version Number = '0002'.

**Table 3-Coding of Biometric Verification Result - '0002'**

| | | |
|---|---|---|
| b5-3 | Matching Result | |
| | 000b | Not performed |
| | 001b | No match |
| | 010b | Poor match |
| | 011b | Reasonable match |
| | 100b | Good match |
| | 101b | Very good match |
| | 110b | Near perfect match |
| | 111b | Perfect match |
| b2-1 | Liveness Result | |
| | 00b | Very bad |
| | 01b | Good |
| | 10b | Bad |
| | 11b | Very good |

In this case, biometric data is encoded on 5 bits instead of 3 bits. A matching result, similar to that shown in Table 2, is encoded on 3 of the available 5 bits. The remaining two bits encode a liveness result.

### Memory Buffer Implementation

The memory within the biometric payment card comprises a memory buffer 126 that is used to store biometric verification results 500. As a new biometric verification result 500 is received during a transaction the processor 122 within the card is configured to update the memory with the new BVR 500. Since the memory space is limited the processor is configured to shift stored BVRs within the memory in order to accommodate the new result. This effectively removes the oldest BVR within the memory.

An example of the processing within the memory buffer (BVRs) of 16 bytes as a new biometric verification result (BVR) is received from the biometric sensor is outlined below.

### Buffer

Shift BVRS ***α*** bits to the right and copy BVR in the ***α*** most significant bits of BVRS.

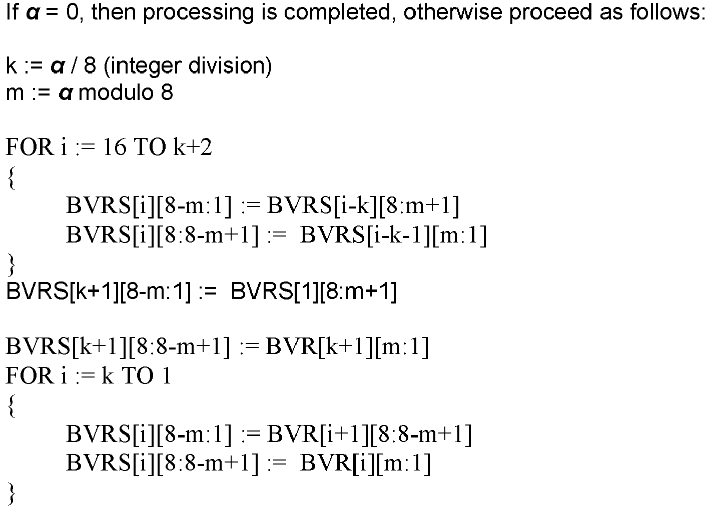

### Application Cryptogram Generation

During generation of the application cryptogram the processor may be configured to build issuer application data as follows:
issuer application data[1] := key derivation index
issuer application data[2] := cryptogram information data
issuer application data [3:8] := card verification results
issuer application data [9:10] := BVR version number

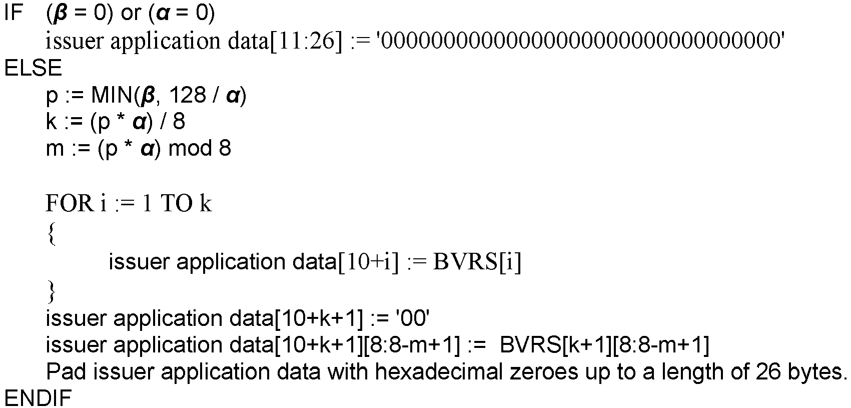

Many modifications may be made to the specific embodiments described above without departing from the scope of the invention as defined in the accompanying claims. Features of one embodiment may also be used in other embodiments, either as an addition to such embodiment or as a replacement thereof.

## Claims

1. A biometric payment card comprising:
a processor (122);
a data store (126) for storing cardholder biometric data as part of a biometric reference (130) for use in authorising transactions;
a biometric sensor configured to provide a biometric verification result to the processor (122), the biometric verification result being derived from a comparison of cardholder biometric data obtained during a transaction with the biometric reference (130)
wherein, for each transaction that the biometric payment card undertakes, the processor is configured to output the biometric verification result to a payment processing network (208) and to output a biometric verification result version number that indicates the encoding format of the biometric verification result.

2. A payment card, as claimed in Claim 1, wherein the biometric matching result comprises a matching score and wherein the biometric sensor is arranged to generate a matching score in respect of biometric data provided during each transaction and to store the matching score in the data store.

3. A payment card as claimed in Claim 1 or Claim 2, wherein the payment card is arranged to output historical biometric verification results to the payment network and wherein the biometric version number indicates the number of historical biometric verification results contained in the output.

4. A payment card as claimed in any preceding claim, wherein the processor is configured to store ***β*** biometric verification results within the data store during a card personalisation process.

5. A method of detecting fraudulent use of a biometric payment card on a payment network, comprising, at a network server (209):
receiving (702) transaction data from the biometric payment card (100) during a current transaction, the transaction data comprising:
***β*** biometric verification results (500) corresponding to a biometric verification result associated with the current transaction, the biometric verification result being derived from a comparison of biometric data obtained during the current transaction with a biometric reference (130), and ***β*** -1 biometric verification results corresponding to ***β*** -1 previous transactions prior to the current transaction; and
a biometric verification result version number (508) that indicates the encoding format of the biometric verification result;
retrieving (704) the biometric verification result version number from the received transaction data;
recovering (706) each biometric verification result from the received transaction data in dependence on the biometric verification result version number;
analysing (708) the ***β*** biometric verification results using a pattern matching algorithm that has been trained on data matching the encoding format of the received transaction data;
triggering (710) a PIN request in dependence on the analysis of the ***β*** biometric verification results.

6. A method as claimed in Claim 5, wherein each biometric verification result comprises α bits and wherein recovering each biometric verification result comprises determining the format and content of the α bits of data in dependence on the biometric verification result version number.

7. A method as claimed in Claim 6, wherein recovering each biometric verification result comprises determining a biometric matching result, the biometric matching result being derived from a comparison of cardholder biometric data obtained during a transaction with a biometric reference (130).

8. A method as claimed in any one of Claims 5 to 7, wherein recovering each biometric verification result comprises determining liveness data indicating if the biometric verification result derives from a live person.

9. A method as claimed in any of Claims 5 to 8, wherein the network server is configured with a plurality of different pattern matching algorithms, each pattern matching algorithm being associated with a different biometric verification result version number.

10. A method as claimed in Claim 9, wherein analysing the ***β*** biometric verification results comprises selecting the pattern matching algorithm that corresponds to the retrieved biometric verification result version number.

11. A computer program product comprising instructions which, when the program is executed by a server, cause the server to carry out the method of any of Claims 5 to 10.

12. A computer-readable storage medium comprising instructions which, when executed by a server, cause the server to carry out the method of any of Claims 5 to 10.
